# EUROPÄISCHE PATENTSCHRIFT

(11) **EP 2 543 287 B1**
(45) Veröffentlichungstag und Bekanntmachung des Hinweises auf die Patenterteilung: **10.09.2014**
(21) Anmeldenummer: 12174898.2
(22) Anmeldetag: 04.07.2012
(51) Int. Cl.: A47J 27/21, A47J 31/00, A47J 31/44, A47J 31/56

(54) **Getränkezubereitungsvorrichtung**
Drink preparation device
Dispositif de préparation de boissons

(30) Priorität: 05.07.2011 DE 102011051569
(43) Veröffentlichungstag der Anmeldung: 09.01.2013
(73) Patentinhaber: Tee-Nuance GmbH, 70619 Stuttgart (DE)
(72) Erfinder: Baumgarte, Bastian, 70619 Stuttgart (DE)
(74) Vertreter: Kaufmann, Ursula Josefine

(56) Entgegenhaltungen:
- EP-A2- 0 375 962
- EP-A2- 1 523 913
- CN-Y- 200 984 097
- DE-U1-202009 005 629

## Beschreibung

Die Erfindung betrifft eine Getränkezubereitungsvorrichtung nach dem Oberbegriff des unabhängigen Anspruchs 1.

Aus der chinesischen Patentanmeldung CN 200984097 Y ist eine Getränkezubereitungsvorrichtung bekannt, die in einem Gehäuse mehrere Einheiten zur Zubereitung von Tee aufweist. In einem ersten Bereich des Gehäuses sind eine Wasserbereitstellungseinheit zum Vorhalten von Frischwasser und eine Wasseraufnahmeeinheit zum Aufnehmen von Abwasser angeordnet. In einem zweiten Bereich des Gehäuses ist eine Sterilisationseinheit zum Sterilisieren von Gefäßen zur Getränkezubereitung, eine Wasserentnahmeeinheit zum Entnehmen von Frischwasser aus der Wasserbereitstellungseinheit, eine Transporteinheit zum Zuführen des Frischwassers aus der Wasserbereitstellungseinheit in die Wasserentnahmeeinheit und jeweils eine Schalteinrichtung zur Aktivierung einer Temperiereinheit, der Sterilisationseinheit und der Transporteinheit angeordnet. Der erste Bereich des Gehäuses ist teilweise mit einem als Arbeitsfläche dienenden wasserdurchlässigen Deckel abgedeckt, der eine runde Mulde und in einem Eckbereich eine Ausnehmung zum Befüllen der Wasserbereitstellungseinheit aufweist. Die Zubereitung des Getränks erfolgt im zweiten Bereich des Gehäuses. Dabei ist an dessen Oberseite eine Heizplatte als Temperiereinheit zum Erhitzen des der Wasserbereitstellungseinheit entnommenen Frischwassers vorgesehen. Das Frischwasser wird in eine Kanne geleitet, die auf der Heizplatte erhitzt wird und kann aus der Kanne in Trinkgefäße gegossen werden.

Die DE 20 2009 405629 U1 zeigt ein elektrisches Gerät zur Heißwasserbereitung in Form einer üblichen Kaffeemaschine, mit einem Abstellbereich in einer Ausnehmung des Gehäuses. An der Oberseite des Gehäuses ist ein Deckel zum Abdecken eines von oben zu befüllenden Wassertanks, sowie ein weiterer Deckel zum Abdecken eines Gießtrichters angeordnet. Wasser wird vom Tank zum Gießtrichter befördert und läuft von dort in ein Aufnahmegefäß.

Aufgabe der Erfindung ist es, eine Getränkezubereitungsvorrichtung bereitzustellen, mit welcher eine erhebliche Verbesserung der Handhabung bei der manuellen Zubereitung von Getränken möglich ist.

Die Aufgabe wird erfindungsgemäß durch die Merkmale des unabhängigen Anspruchs 1 gelöst. Günstige Ausgestaltungen und Vorteile der Erfindung ergeben sich aus den weiteren Ansprüchen, der Beschreibung und der Zeichnung.

Es wird eine Getränkezubereitungsvorrichtung vorgeschlagen mit wenigstens einer Temperiereinheit, welche zum Temperieren von Frischwasser vorgesehen ist, einer Wasserentnahmeeinheit, welche zum Entnehmen von temperiertem Frischwasser aus der Temperiereinheit vorgesehen ist, einer Transporteinheit, welche zum Zuführen des Frischwassers aus einer Wasserbereitstellungseinheit über die Temperiereinheit in die Wasserentnahmeeinheit vorgesehen ist, einer Schalteinrichtung, welche zur Aktivierung zumindest einer Einheit vorgesehen ist, wobei wenigstens die Temperiereinheit in einem Gehäuse mit Gehäusewänden angeordnet ist und das Oberseite aufweist, wobei ein Wasserpfad zur Entnahme des temperierten Frischwassers eine Gehäusewand durchstößt und im bestimmungsgemäßen Zustand wenigstens bereichsweise oberhalb der Oberseite verläuft, wobei das Gehäuse wobei das Gehäuse tablettartig ausgebildet ist.

Durch die günstige Gestaltung der Getränkezubereitungsvorrichtung (bzw. des Gehäuses) wie eine Art Tablett oder Dose ragt zumindest im bestimmungsgemäßen Gebrauchszustand ein Wasserhahn als einziges Element deutlich über das Gehäuse, beispielsweise die Oberseite der Getränkezubereitungsvorrichtung, hinaus. Der Querschnitt des Gehäuses kann beliebig gewählt werden, beispielsweise in Form eines flachen Quaders mit geringerer Höhe als die Abmessungen in Breite und Länge, oder in Form eines flachen Zylinders. Vorteilhaft kann Getränkezubereitungsvorrichtung insbesondere als Tablett verwendet werden.

Die Getränkezubereitungsvorrichtung bietet einerseits einen hohen Bedienkomfort für die Bereitung von Getränken, insbesondere auch hochwertiger Tees, bei denen besonders hohe Ansprüche an die Zubereitung gestellt sind, andererseits bietet die Getränkezubereitungsvorrichtung darüber hinaus ein elegantes Aussehen, das die Verwendung vor Ort auch in einem festlichen Rahmen, z.B. im Rahmen einer Teezeremonie, erlaubt.

Vorteilhaft können alle Funktionen, die zur Zubereitung von Getränken kompakt in dem Gehäuse untergebracht sein und die Getränkezubereitungsvorrichtung insbesondere als Tablett verwendet werden. Daher eignet sich die Getränkezubereitungsvorrichtung idealerweise für die Zubereitung von Tee, wie sie üblicherweise in asiatischen Ländern bei einer traditionelle Teezeremonie praktiziert und zelebriert wird, wie beispielsweise in China, Japan oder Korea. Das bedeutet, dass die mit allen technischen Elementen zur Zubereitung von Getränken versehene Getränkezubereitungsvorrichtung, insbesondere als Teezubereitungsvorrichtung, sehr praktisch und bedienerfreundlich aufgebaut ist und den Anwender beim Aufbau und Transport entlastet. Die Getränkezubereitungsvorrichtung kann überall schnell aufgebaut bzw. platzsparend gelagert werden und dementsprechend schnell und einfach von einer Person bedient werden. Durch eine Nutzung der Oberseite als Arbeitsfläche und durch die Unterbringung aller Einheiten außer der Wasserentnahmeeinheit unter der Oberseite wird bei der Getränkezubereitung durch mehrere Anwender die Kommunikation zwischen diesen auf vorteilhafte Weise gefördert, da keine Bauteile den Blickkontakt der Anwender stören. Die Getränkezubereitungsvorrichtung erhält, insbesondere durch die Tablettform, ein besonders ansprechendes Aussehen bei gleichzeitig vorteilhafter und kompakter technischer Funktion.

Besonders vorteilhaft verläuft der Wasserpfad wenigstens stromab der Temperiereinheit wenigstens bereichsweise oberhalb der Oberseite. Dieser Bereich des Wasserpfads kann besonders vorteilhaft in einem Wasserhahn verlaufen. Insbesondere kann ausschließlich der Wasserhahn oberhalb der Oberseite des Gehäuses angeordnet sein, der günstigerweise abnehmbar oder zumindest wegklappbar ausgebildet sein kann. Hierdurch kann die Getränkezubereitungsvorrichtung als Tablett zum Servieren beispielsweise der Teetassen und/oder Teekanne zum Zubereiten des Tees verwendet werden. Vor Ort kann dann der Wasserhahn angebracht oder in seine Gebrauchsstellung hochgeklappt und die Getränkezubereitungsvorrichtung in Betrieb genommen werden.

Der Wasserpfad endet oberhalb der Oberseite. Die Oberseite ist vorzugsweise im Wesentlichen flächig, insbesondere plan, ausgebildet. Der Ausdruck "im wesentlichen plan" schließt nicht aus, dass Komponenten leicht erhöht an der Oberseite angeordnet sein können, wie etwa etwaige Bedienelemente, ein Bildschirm einer Anzeigeeinrichtung etc. Ebenso kann ein Rand an der Oberseite vorgesehen sein. Ferner kann die Oberseite auch eine geprägte oder gewellte Oberfläche aufweisen.

Der Bildschirm kann beispielsweise alternativ auch in einer Schublade untergebracht sein, die in einer Seitenwand des Gehäuses angeordnet ist und bei Bedarf aus der Seitenwand herausgefahren werden kann. Damit steht mehr Platz an der Oberfläche zur Verfügung und der Bildschirm ist besser gegen Spritzwasser geschützt.

In vorteilhafter Weise sind verschiedene miteinander in Wirkverbindung stehende Einheiten vorzugsweise dicht in einem Gehäuse angeordnet. Eine modulartige Ausgestaltung, bei der die Komponenten sinnvoll auf mehrere Gehäuse aufgeteilt sind, die miteinander gekoppelt werden, ist ebenfalls denkbar. Die erfindungsgemäße Ausgestaltung der Vorrichtung ermöglicht dem Anwender eine große Vielfalt an Bedienmöglichkeiten bei der Getränkezubereitung.

Vorteilhaft kann die Temperiereinheit zum Temperieren des Frischwassers mit einer wählbar einstellbaren Temperatur vorgesehen sein. Denkbar ist jedoch auch, dass die Temperiereinheit das Frischwasser mit einer fest eingestellten Temperatur temperiert. Günstigerweise kann die Temperatur auch kontinuierlich einstellbar sein oder in diskreten Stufen. Bevorzugt kann die Temperiereinheit zum Erwärmen des Frischwassers dienen.

Die Wasseraufnahmeeinheit kann in vorteilhafter Ausgestaltung ein herausnehmbarer Behälter sein, eine Ablauffläche, die an einen Wasserablauf angeschlossen ist, oder dergleichen.

Die Wasserentnahmeeinheit kann vorteilhaft zum Entnehmen einer wählbar einstellbaren Menge von temperiertem Frischwasser aus der Temperiereinheit vorgesehen sein. Die Menge von temperiertem Frischwasser kann auch fest vorgegeben sein. Günstigerweise kann die Menge auch kontinuierlich einstellbar sein oder in diskreten Stufen.

In diesem Zusammenhang soll unter "Einheit" insbesondere eine Gesamteinheit verstanden werden, welche auch aus mehreren Einzeleinheiten bestehen kann. In vorteilhafter Weise reduzieren die in die erfindungsgemäße Getränkezubereitungsvorrichtung integrierten Einheiten erheblich den Aufwand des Anwenders bei der Zubereitung von Getränken und ermöglicht ihm, sich ausschließlich auf den wesentlichen bzw. zeremoniellen Teil der Zubereitung von Getränken zu konzentrieren. Besonders vorteilhaft und entlastend für den Anwender der Getränkezubereitungsvorrichtung ist, dass die Temperatur und die entnehmbare Menge des Frischwassers genau eingestellt werden können.

Im Gehäuse der erfindungsgemäßen Getränkezubereitungsvorrichtung ist die technische Ausstattung für einen automatischen Ablauf der im Hintergrund ablaufenden Vorgänge integriert, wie beispielsweise die Bereitstellung, der Transport, die Erwärmung und Dosierung des Frischwassers. Zudem ist die Getränkezubereitungsvorrichtung durch die nahezu allseitig anschließbare Wasserentnahmeeinheit flexibel für alle Situationen vorgerüstet, wodurch der Anwender situationsgemäß die Wasserentnahmeeinheit anschließen kann. Da alle Funktionen, die zur Zubereitung von Getränken kompakt in einem Gehäuse untergebracht sind und die Getränkezubereitungsvorrichtung insbesondere als Tablett verwendet werden kann, eignet sich die Getränkezubereitungsvorrichtung idealerweise für die Zubereitung von Tee, wie sie üblicherweise in asiatischen Ländern bei einer traditionelle Teezeremonie praktiziert und zelebriert wird.

In vorteilhafter Weise kann der Wasserpfad aus der Oberseite oder aus einer Seitenwand austreten. Hierdurch kann die Getränkezubereitungsvorrichtung in vorteilhafter Weise den unterschiedlichen Platzverhältnissen bzw. Situationen während der Getränkezubereitung gerecht werden, da die Gehäusewand für den Anschluss der Wasserentnahmeeinheit frei wählbar ist. Die Entnahme des Frischwassers aus einer Seitenwand ist besonders vorteilhaft, da die gesamte Oberseite der Getränkezubereitungsvorrichtung für die Zubereitung eines Getränks zur Verfügung steht und dadurch optisch besonders ansprechend aussieht. Insbesondere ermöglichen die unterschiedlichen Anschlussmöglichkeiten dem Anwender eine flexible und optimale Handhabung.

Zweckmäßigerweise kann die Oberseite als Arbeitsfläche zum Abstellen und Befüllen von einem oder mehreren Gefäßen mit temperiertem Frischwasser vorgesehen sein. Die als Arbeitsfläche ausgebildete Oberseite der Getränkezubereitungsvorrichtung hat den Vorteil, dass sie während der Getränkezubereitung belastbar und bei Temperaturschwankungen formstabil aber auch leicht zu reinigen ist. Diese Arbeitsfläche erleichtert somit wesentlich die Handhabung bei der Getränkezubereitung.

Weiterhin kann die Getränkezubereitungsvorrichtung eine Wasserbereitstellungseinheit umfassen, welche zum Vorhalten von Frischwasser vorgesehen ist, eine Wasseraufnahmeeinheit, welche zum Aufnehmen von Abwasser vorgesehen ist, eine Transporteinheit, welche zum Zuführen des Frischwassers aus der Wasserbereitstellungseinheit über die Temperiereinheit in die Wasserentnahmeeinheit vorgesehen ist, eine Schalteinrichtung, welche zur Aktivierung zumindest einer Einheit vorgesehen ist, wobei die Einheiten der Getränkezubereitungsvorrichtung in wenigstens einem Gehäuse zusammengefasst sind. Ein wesentlicher Vorteil der Getränkezubereitungsvorrichtung liegt insbesondere darin, dass die Getränkezubereitungsvorrichtung alle zu Getränkezubereitung notwendigen Einheiten in einem Gehäuse beinhaltet und der Anwender somit während der Getränkezubereitung weitgehend autark sein kann.

Günstigerweise kann eine Wiegeeinrichtung zum Abwiegen einer Getränkezutatmenge vorgesehen sein, die vorzugsweise in die Getränkezubereitungsvorrichtung integriert ist. Die Wiegeeinrichtung kann insbesondere in der Arbeitsplatte integriert sein kann. Vorteilhaft kann die Wiegeeinrichtung auch im Gehäuse untergebracht sein und bei Bedarf mit einer Art Schublade aus einer Seitenwand herausgefahren werden. In diesem Fall steht auf der Oberseite des Gehäuses mehr Platz zur Verfügung, die Wiegeeinrichtung ist besser gegen Spritzwasser geschützt und das Abwiegen auch geringer Mengen von Getränkezutaten kann in relativ geschützter und ruhiger Umgebung in der Schublade vorgenommen werden. Ein wesentlicher Vorteil der Erfindung besteht darin, dass die zur Zubereitung von Getränken benötigte Getränkezutatmenge getränkespezifisch mit der in der Getränkezubereitungsvorrichtung integrierten Wiegeeinrichtung genau abgewogen werden kann. Dadurch kann beim Aufbau und bei der Vorbereitung zur Zubereitung der Getränke auf eine zusätzliche Wiegeeinrichtung verzichtet werden, wodurch nicht nur weniger Platz benötigt wird, sondern auch sehr viel Zeit gespart werden kann, da der Aufwand beim Aufbau minimiert wird.

Die Wiegeeinrichtung kann eine abnehmbare Waagschale ggfs. mit erhöhter Umrandung, aufweisen oder auch als Balkenwaage mit einem aus der Oberseite herausstehendem Stab als Halterung des Waagebalkens ausgebildet sein.

In vorteilhafter Weise kann die Getränkezubereitungsvorrichtung eine Einstelleinrichtung zumindest zum Einstellen von Parameterwerten zur Getränkezubereitung aufweisen. In vorteilhafter Weise ist hierdurch eine individuelle und reproduzierbare Zubereitung von einem Getränk oder von verschiedenen Getränken ohne zusätzliche Vorrichtungen möglich. Vorzugsweise ist damit eine bequeme und bedienerfreundliche Zubereitung mehrerer Getränke per Knopfdruck möglich. Die Einstelleinrichtung kann auch zur Einstellung, Aktivierung und/oder Deaktivierung der weiteren Einheiten und Einrichtungen der Getränkezubereitungsvorrichtung dienen.

Zweckmäßigerweise handelt es sich bei den Parameterwerten um die Wassertemperatur, die Ziehzeit des Getränks, die Wassermenge und/oder die auf eine definierte Wassermenge bezogene Getränkezutatmenge. Hierdurch ist eine exakte Einstellung von mehreren Parameterwerten bei der Zubereitung von Getränken möglich. Durch eine definierte Entnahme der Wassermenge ist beispielsweise ein genaues Einstellen des Verhältnisses zwischen der Getränkezutat und der Wassermenge möglich. Insbesondere die Zubereitung temperatursensibler Getränke, wie beispielsweise Grüntee oder Babynahrung, kann durch die genaue Einstellung der Parameterwerte in einer zuverlässig hohen Qualität bzw. Quantität erfolgen. In vorteilhafter Weise kann ein Getränk durch geringfügige Änderungen der Parameter, wie beispielsweise eine höhere Wassertemperatur und eine kürzere Ziehzeit, auf unterschiedliche Art zubereitet werden, wodurch verschiedene Aromen des Getränks erzeugt werden können. Dadurch kann bei der Zubereitung des Getränks auf die verschiedenen Vorlieben bzw. den Geschmack des Anwenders eingegangen werden. Ferner können bei der Zubereitung des Getränks die unterschiedlichen Eigenschaften der Getränkezutat berücksichtigt werden.

Auf besonders vorteilhafte Weise können die Parameterwerte durch Eingabe eines Parameter-Codes bestehend aus einer fünfstelligen Buchstabenkombination aufgerufen werden. So kann der Anwender auf sehr schnelle Weise auch komplexe Parameterkombinationen wie von Aufguss zu Aufguss variierende Ziehzeiten schnell und einfach eingeben. Diese Buchstabenkombination lässt sich auf den Verpackung der Getränkezutat aufdrucken um so die Eignung der Getränkezutat für die Getränkezubereitungsvorrichtung zu verdeutlichen.

Die Getränkezubereitungsvorrichtung kann über eine Erkennungseinrichtung verfügen, mit der automatisch die Getränkezutat erkannt wird und die notwendige Parametereinstellung und weiterführende Informationen über die Getränkezutat in der Getränkezubereitungsvorrichtung bereitgestellt werden können. Vorteilhaft weist die Verpackung der Getränkezutat eine entsprechende detektierbare Markierung auf. Die Parametereinstellung kann als Vorschlagsliste angezeigt werden und optional durch den Anwender manuell verfeinert oder geändert werden.

Die Erkennungseinrichtung kann beispielsweise einen Markierungscode-Scanner umfassen, insbesondere einen Barcode-Scanner. Die Verpackung der Getränkezutat kann eine entsprechende scannbare Markierung aufweisen, so dass alle notwendigen Parametereinstellung und weiterführende Informationen über die Getränkezutat auf vorteilhafte Weise durch Scannen der Verpackung der Getränkezutat an die Getränkezubereitungsvorrichtung übertragen werden können. Alternativ oder zusätzlich kann eine Funkeinrichtung vorgesehen sein, insbesondere eine RFID-Einrichtung. Ist in der jeweiligen Verpackung der Getränkezutat ein RFID-Chip integriert, kann die Getränkezutat automatisch erkannt und Parametereinstellungen und weiterführende Informationen bereitgestellt werden.

Vorteilhafterweise kann die Getränkezubereitungsvorrichtung eine Anzeigeeinrichtung zum Anzeigen der Ist-Parameterwerte und der Soll-Parameterwerte aufweisen. Besonders vorteilhaft ist, dass sowohl beim Eingeben der Parameterwerte als auch während der Zubereitung eines Getränks Parameterwerte auf der Anzeigeeinrichtung optisch angezeigt und somit vom Anwender kontrolliert werden können. Zudem ist eine Änderung bzw. Eingreifen in einen Vorgang vor und während der Zubereitung eines Getränks jederzeit möglich. Insbesondere während der Zubereitung eines Getränks können Abweichungen bzw. Störungen von eingestellten Parametern optisch und akustisch auf der Anzeigeeinrichtung angezeigt werden, so dass der Anwender einen manuellen Abbruch der Zubereitung oder eine Änderung bei der Zubereitung eines Getränks einleiten kann. Die Anzeigevorrichtung kann auch zur Wiedergabe von weiteren Informationen, wie etwa dem Status der Getränkezubereitungsvorrichtung oder allgemeine Informationen zum Getränk und dergleichen, genutzt werden.

In vorteilhafter Weise kann die Getränkezubereitungsvorrichtung eine Speichereinrichtung aufweisen, in welcher zumindest ein Programm zur Herstellung eines Getränks hinterlegbar und auslesbar ist. Das hat den Vorteil, dass ein unkundiger Anwender beim Erwerb der Getränkezubereitungsvorrichtung, zusätzlich zu den in einem Programmspeicher der Getränkezubereitungsvorrichtung hinterlegten Standardrezepturen, weitere Rezepturen zur Zubereitung von Getränken auf einem Speichermedium erwerben kann, die ihm von Anfang an eine professionelle Zubereitung von Getränken ermöglichen. Der Anwender kann bewährte oder neue Rezepturen mit individuell eingestellten Parametern für die Zubereitung von Getränken in der Speichereinrichtung abspeichern, jederzeit abrufen und gegebenenfalls modifizieren bzw. verbessern. Ein weiterer Vorteil ist, dass die Anwender der Getränkezubereitungsvorrichtung untereinander über das Speichermedium Rezepturen austauschen können oder, dass Rezepturen nachgekauft werden können. Dadurch ist eine reproduzierbare Zubereitung vieler Getränkevarianten bzw. Getränkerezepturen in gleicher Qualität gewährleistet.

Die Getränkezubereitungsvorrichtung kann über einen Sender und/oder Empfänger verfügen, über den die Getränkezubereitungsvorrichtung in Verbindung mit anderen Geräten treten kann. Auf vorteilhafte Weise kann so die Getränkezubereitungsvorrichtung über eine Fernsteuerungseinheit gesteuert werden. Besonders vorteilhaft ist dies bei einer Nutzung in einem Restaurant, da so die Getränkezubereitungsvorrichtung einem Gast überlassen werden und weiterhin von einem Angestellten des Restaurants gesteuert werden kann. Sender und/oder Empfänger können vorteilhaft Funksender und/oder Funkempfänger sein.

Über den Sender und/oder Empfänger kann die Getränkezubereitungsvorrichtung mit einem Computer mit geeignetem Empfänger und/oder Sender kommunizieren. Dieser Weg ist sehr vorteilhaft zum Abspeichern weiterer Rezepturen zur Zubereitung von Getränken und, um neue Versionen der Software der Getränkezubereitungsvorrichtung aufzuspielen.

In einer Weiterbildung kann die Getränkezubereitungsvorrichtung eine Dosiereinrichtung zum Abgeben von Frischwasser in einer definierten Menge aufweisen. Hierdurch wird in vorteilhafter Weise die Bereitstellung einer gewünschten Wassermenge mit einer bestimmten Temperatur wesentlich erleichtert. Besonders vorteilhaft ist die Dosiereinrichtung bei der Zubereitung mehrerer Getränke hintereinander für eine oder mehrere Personen, da der Anwender stets die gewünschte temperierte Wassermenge erhält. Dies bewirkt eine entspannte und genussreiche Situation bei der Zubereitung der Getränke.

In vorteilhafter Weise können die Schalteinrichtung und/oder eine Wiegeeinrichtung zum Abwiegen einer Getränkezutatmenge und/oder die Einstelleinrichtung und/oder die Anzeigeeinrichtung und/oder die Speichereinrichtung und/oder die Dosiereinrichtung zumindest teilweise zusammenwirken. Ein wesentlicher Vorteil ist, dass die Zubereitung der Getränke durch die zusammenwirkenden Einrichtungen nahezu automatisch abläuft und somit der Anwender während der Zubereitung der Getränke entlastet wird. Alternativ kann der Anwender den Grad der Unterstützung durch die Einrichtungen der Getränkezubereitungsvorrichtung variieren, indem er einzelne Funktionen zumindest einer Einrichtung, wie beispielsweise die Dosiereinrichtung für mehrfache Aufgüsse, manuell per Tastendruck aktiviert. Ein weiterer Vorteil der Anordnung der Einrichtungen besteht darin, dass diese bauraumsparend bzw. kompakt zusammengefasst und die Elektronik der Einrichtungen geschützt im Gehäuse der Getränkezubereitungsvorrichtung angeordnet ist. Die für den Anwender sichtbaren Teile der genannten Einrichtungen erleichtern dem Anwender der Getränkezubereitungsvorrichtung auf Grund der übersichtlichen Anordnung die Handhabung und gewährleisten ihm stets eine hohe reproduzierbare Qualität und Quantität der Getränke.

In Ausgestaltung der Erfindung kann die Oberseite des Gehäuses, beispielsweise ein abnehmbarer Deckel des Gehäuses, zumindest zwei Oberflächenelemente umfassen, wobei ein erstes Oberflächenelement von dem Gehäuse abnehmbar und wasserdurchlässig und ein zweites Oberflächenelement fest mit dem Gehäuse verbunden und wasserundurchlässig ausgeführt ist, wobei vorzugsweise das erste Oberflächenelement zumindest eine Öffnung umfasst, durch welche Abfallmaterial in die Wasseraufnahmeeinheit spülbar ist. In vorteilhafter Weise sind die beiden schlicht ausgebildeten Oberflächenelemente sichtbar funktionell und optisch getrennt angeordnet. Beide Oberflächenelemente sind ideal an ihre Funktion angepasst und besonders pflegeleicht. Besonders vorteilhaft ist, dass das erste Oberflächenelement zur besseren Reinigung abnehmbar ist und eine optisch nicht sichtbare Oberflächenöffnung für Abfallmaterial aufweist, die in das erste Oberflächenelement integriert ist.

In weiterer Ausgestaltung kann die Getränkezubereitungsvorrichtung eine Warmhalteeinheit zum Warmhalten von Gefäßen zur Getränkezubereitung aufweisen. Diese Warmhalteeinheit hat den Vorteil, dass alle zur Getränkezubereitung nötigen Gefäßen direkt mit der Getränkezubereitungsvorrichtung erwärmt und warmgehalten werden können, wodurch die Gefäße für temperatursensible Getränke auch auf eine definierte Temperatur vortemperiert werden können, damit sich das Aroma bei den Getränken besser entfalten kann. Die Warmhalteeinheit erleichtert somit wesentlich die Handhabung bei der Getränkezubereitung.

Ferner kann die Warmhalteeinheit ein Heizelement umfassen, das mit dem ersten Oberflächenelement in Wirkverbindung steht, welches eine gute Wärmeleitfähigkeit aufweist, wobei vorzugsweise zwischen dem ersten Oberflächenelement und dem Heizelement ein Wärmeübertragungselement vorgesehen ist. In vorteilhafter Weise liegt das erste Oberflächenelement teilweise auf dem Heizelement und dem Wärmeübertragungselement, so dass durch das Eigengewicht des ersten Oberflächenelementes immer eine sichere Kontaktierung mit dem Heizelement bzw. eine Wärmeübertragung gewährleistet ist. Zudem sind das Heizelement und das Wärmeübertragungselement sichtgeschützt und dezent unterhalb des ersten Oberflächenelementes angeordnet, so dass der Anwender sich nicht verletzen kann.

In vorteilhafter Ausgestaltung kann die Wiegeeinrichtung zumindest teilweise in das zweite Oberflächenelement des Gehäuses integriert sein. Besonders vorteilhaft ist, dass die Wiegeeinrichtung gut zugänglich bzw. bedienerfreundlich angeordnet ist und der Anwender die Getränkezutatmenge ohne eine zusätzliche Wiegeeinrichtung direkt an der Getränkezubereitungsvorrichtung ermitteln kann. Zudem ist die Elektronik der Wiegeeinrichtung geschützt vor äußeren Einflüssen im Gehäuse der Getränkezubereitungsvorrichtung untergebracht.

In weiterer vorteilhafter Ausgestaltung der erfindungsgemäßen Getränkezubereitungsvorrichtung kann die Wasserbereitstellungseinheit einen Frischwasserbehälter und die Wasseraufnahmeeinheit einen Abwasserbehälter aufweisen, wobei die Wasserbehälter herausnehmbar in dem Gehäuse aufgenommen sind. Ein wesentlicher Vorteil der in die Getränkezubereitungsvorrichtung integrierten Einheiten, d.h. der Wasserbereitstellungseinheit und der Wasseraufnahmeeinheit ist, dass der Anwender die Zubereitung der Getränke sowohl innerhalb als auch außerhalb der Wohnung zubereiten kann, da er Frischwasser im Frischwasserbehälter bevorraten und verbrauchtes Wasser im Abwasserbehälter entsorgen kann. Insbesondere ist das Frischwasser in der Getränkezubereitungsvorrichtung vor Staub und Schmutz geschützt untergebracht. Zudem kann der Frischwasserbehälter zum Befüllen mit frischem Wasser und der Abwasserbehälter zum Entleeren des verbrauchten Wassers oder zum Reinigen besonders einfach aus der Getränkezubereitungsvorrichtung entnommen werden.

Zweckmäßigerweise kann die Wasserbereitstellungseinheit und/oder die Wasseraufnahmeeinheit eine Messeinrichtung zur Messung des Füllstands in zumindest einem Wasserbehälter aufweisen, wobei beispielsweise die Messeinrichtung einen Schwimmer oder eine elektrische Messeinrichtung, z.B. einen Reed-Sensor oder dergleichen, aufweisen kann. Diese Einrichtung ermöglicht auf einfache Weise in der Wasserbereitstellungseinheit und in der Wasseraufnahmeeinheit eine permanente Messung der Wasserstände, so dass der Anwender ständig über den aktuellen Stand des Frischwassers und des verbrauchten Wassers informiert ist. Somit kann der Anwender rechtzeitig Frischwasser nachfüllen bzw. verbrauchtes Wasser entsorgen.

Vorzugsweise kann die Wasseraufnahmeeinheit eine Wasserablauffläche mit einer Ablauföffnung aufweisen, die in den Abwasserbehälter mündet, wobei vorzugsweise die Wasserablauffläche unterhalb des ersten Oberflächenelements angeordnet ist. In vorteilhafter Weise kann das verbrauchte Wasser an irgendeiner Stelle über dem ersten Oberflächenelement ausgegossen werden, da es durch die Wasserablauffläche immer in den Abwasserbehälter geleitet wird. Dadurch kann sich der Anwender entspannt auf die Zubereitung des Getränks konzentrieren.

In vorteilhafter Ausgestaltung der erfindungsgemäßen Getränkezubereitungsvorrichtung kann die Temperiereinheit einen Durchlauferhitzer aufweisen. Hierdurch wird gewährleistet, dass innerhalb kurzer Zeit eine ausreichende Menge temperiertes Frischwasser zur Verfügung gestellt werden kann. Alternativ oder zusätzlich kann die Temperiereinheit auch einen Boiler aufweisen.

In weiterer vorteilhafter Ausgestaltung der erfindungsgemäßen Getränkezubereitungsvorrichtung kann die Temperiereinheit über ein Überlaufventil mit dem Abwasserbehälter in Verbindung stehen. Günstigerweise kann die Temperiereinheit auch eine Sensoreinheit zur Erkennung der Temperatur aufweisen. Das hat den Vorteil, dass die Temperatur des zubereiteten Frischwassers genau eingestellt werden kann und, dass die auf Grund der Wärmeausdehnung überschüssige Menge an temperiertem Frischwasser in den Abwasserbehälter geleitet und somit eine Störung ausgeschlossen werden kann. Diese Verbindung kann außerdem in vorteilhafter Weise für die Reinigung der Getränkezubereitungsvorrichtung verwendet werden, da so das Reinigungswasser direkt von der Temperiereinheit, beispielsweise von einem Durchlauferhitzer, in den Abwasserbehälter befördert werden kann, ohne dass dieser Vorgang für den Anwender sichtbar ist.

Bevorzugt kann die Transporteinheit zumindest ein Wasserleitungssystem und eine in das Wasserleitungssystem eingebundene Wasserpumpe umfassen, wobei das Wasserleitungssystem dazu vorgesehen ist, die Wasserbereitstellungseinheit über die Temperiereinheit mit der Wasserentnahmeeinheit zu verbinden. Hierdurch wird in vorteilhafter Weise gewährleistet, dass innerhalb kurzer Zeit eine ausreichende Menge temperiertes Frischwasser befördert und der Wasserentnahmeeinheit zur Verfügung gestellt werden kann. Zur Wasserförderung kann eine Wasserpumpe in das Wasserleitungssystem eingebunden sein. Alternativ ist auch eine Verwendung des Leitungsdrucks oder eines externen, erhöht angebrachten Wassertanks statt einer Pumpe denkbar.

Ferner kann die Transporteinheit eine Sensoreinrichtung zur Erkennung einer Durchflussmenge des Frischwassers aufweisen, beispielsweise einer Durchflussmenge zwischen einer in das Wasserleitungssystem eingebunden Wasserpumpe und der Temperiereinheit. Der Vorteil dieser Sensoreinrichtung liegt darin, dass lediglich eine definierte Menge Frischwasser von der Wasserpumpe zur Temperiereinheit befördert wird.

Zweckmäßigerweise kann die Transporteinheit eine Kupplung umfassen, die zwischen der Wasserbereitstellungseinheit und einer Wasserleitung des Wasserleitungssystems angeordnet ist. Vorteilhaft kann die Kupplung einen Temperatursensor umfassen oder mit einem gekoppelt sein. Zweckmäßigerweise kann die Kupplung einen Adapter zum Anschluss an eine Wasserquelle, z.B. ein Frischwassersystem des Hauses, einen austauschbaren Wasserbehälter, der zur einmaligen Nutzung vorgesehen ist, einen nachfüllbaren Wasserbehälter und der gleichen, umfassen. Die Kupplung ermöglicht in vorteilhafter Weise eine einfache Abkopplung bzw. Ankopplung der Wasserleitung des Wasserleitungssystems z.B. mit der Wasserbereitstellungseinheit bzw. mit dem Frischwassersystem des Hauses. Dadurch kann der Frischwasserbehälter problemlos herausgezogen und wieder eingesetzt werden. Auf Grund des integrierten Temperatursensors kann in vorteilhafter Weise die notwendige Leistung der Temperiereinheit, z.B. eines Durchlauferhitzers oder Boilers, bereits vor Eintritt des Frischwassers in die Temperiereinheit ermittelt und eingestellt werden, wodurch die Erwärmung und Bereitstellung von temperiertem Frischwasser genauer erfolgen kann. Dadurch, dass die Wasserbereitstellungseinheit an ein Frischwassersystem und/oder die Wasseraufnahmeeinheit an ein Abwassersystem eines Hauses anschließbar ist, kann die Getränkezubereitungsvorrichtung in vorteilhafter Weise große Wassermengen verarbeiten und somit bei großer Gästezahl oder als ständige Einrichtung, beispielsweise in der Gastronomie, verwendet werden, wodurch der Aufwand mit der Wasserversorgung und Wasserentsorgung gänzlich entfällt. Vorzugsweise kann somit ein störungsfreier Ablauf gewährleistet werden.

Des Weiteren kann die Wasserentnahmeeinheit einen Wasserhahn umfassen, der fest oder abnehmbar an dem Wasserleitungssystem angeordnet ist. Der Wasserhahn kann eine feste Höhe aufweisen oder auch höhenverstellbar sein. Ein wesentlicher Vorteil des abnehmbaren Wasserhahns liegt insbesondere darin, dass die Getränkezubereitungsvorrichtung beim Transport und bei der Aufbewahrung platzsparend ist. Zudem ist der Wasserhahn leicht montierbar bzw. demontierbar und derart im Randbereich des Gehäuses angeordnet, dass der Zubereitungsbereich des Anwenders nicht eingeschränkt und dennoch gut erreichbar ist. Vorteilhaft kann der Wasserhahn als einziges Element deutlich über die Oberseite der Getränkezubereitungsvorrichtung hinausragen, so dass die Getränkezubereitungsvorrichtung wie eine Art Tablett gestaltet ist.

Die Erfindung ist nachfolgend beispielhaft, ohne Beschränkung der Allgemeinheit, anhand eines in Zeichnungen dargestellten Ausführungsbeispiels näher erläutert.

Es zeigen:
Fig. 1 in einer perspektivischen Darstellung eine Seitenansicht einer erfindungsgemäßen Getränkezubereitungsvorrichtung, mit mehreren Einheiten zur Getränkezubereitung, die in einem Gehäuse zusammengefasst sind, und
Fig. 2 eine Explosionsdarstellung der Getränkezubereitungsvorrichtung aus Fig. 1 mit einer Wasserbereitstellungseinheit, einer Wasseraufnahmeeinheit, einer Temperiereinheit, einer Wasserentnahmeeinheit, einer Transporteinheit, einer Einstelleinrichtung und einer Wiegeeinrichtung sowie einer als Arbeitsfläche vorgesehenen Oberseite, und
Fig. 3 eine Draufsicht in das Innere des Gehäuses der Getränkezubereitungsvorrichtung aus Fig. 1, und
Fig. 4 ein schematisches Blockdiagramm der erfindungsgemäßen Getränkezubereitungsvorrichtung, und
Fig. 5 ein schematisches Blockdiagramm einer Fernsteuerungseinheit für die Getränkezubereitungsvorrichtung, und
Fig.6 einen schematischen Ausschnitt eines Blockdiagramms der Getränkezubereitungsvorrichtung mit einem Funkempfänger, und
Fig. 7 einen exemplarischen Menüablauf der Zubereitung eines Getränks in der Getränkezubereitungsvorrichtung

In den folgenden Figuren sind funktionell gleich wirkende Elemente jeweils mit gleichen Bezugszeichen beziffert.

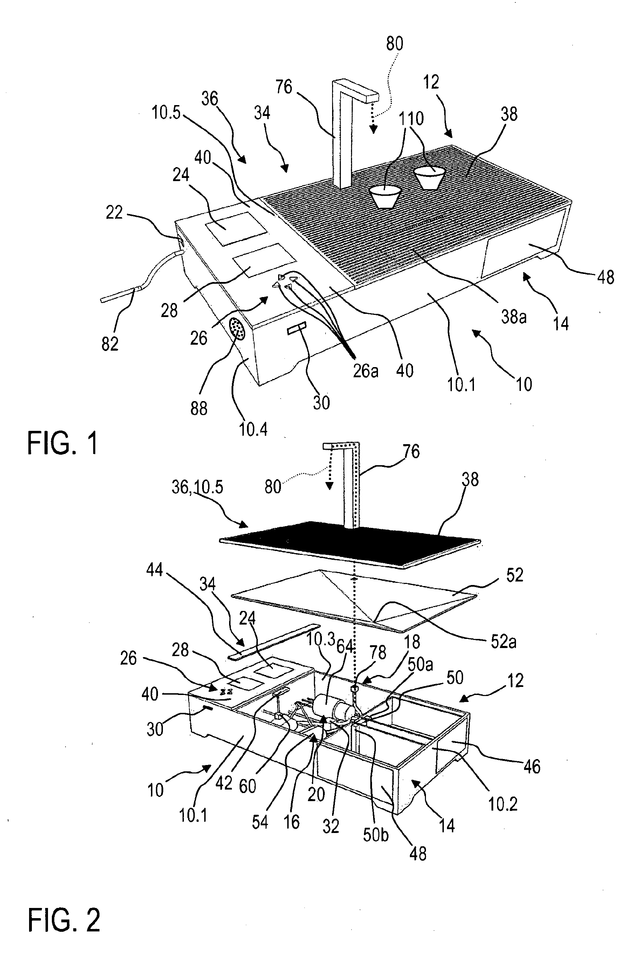

Die Fig. 1 bis 3 zeigen eine erfindungsgemäße Getränkezubereitungsvorrichtung mit einer Temperiereinheit 16, welche zum Temperieren von Frischwasser vorgesehen ist, einer Wasserentnahmeeinheit 18, welche zum Entnehmen von temperiertem Frischwasser aus der Temperiereinheit 16 vorgesehen ist, einer Transporteinheit 20, welche zum Zuführen des Frischwassers aus einer Wasserbereitstellungseinheit 12 über die Temperiereinheit 16 in die Wasserentnahmeeinheit 18 vorgesehen ist. Ebenfalls umfasst die Getränkezubereitungsvorrichtung eine Schalteinrichtung 22, welche zur Aktivierung zumindest einer Einheit 12, 16, 18, 20 vorgesehen ist, wobei wenigstens die Temperiereinheit 16 in einem tablettartigen, flachen Gehäuse 10 mit Gehäusewänden 10.1, 10.2, 10.3, 10.4, 10.5 angeordnet ist und das eine im wesentlichen plane Oberseite 36 aufweist, wobei ein Wasserpfad 80 zur Entnahme des temperierten Frischwassers eine Gehäusewand 10.1, 10.2, 10.3, 10.4, 10.5 durchstößt und im bestimmungsgemäßen Zustand wenigstens bereichsweise oberhalb der Gehäusewand 10.5 verläuft, die eine Oberseite 36 des Gehäuses 10 bildet.

In diesem Zusammenhang soll unter "Wasserpfad" insbesondere ein Verlauf des durch die Einheiten 12, 16, 18, 20 durchfließenden Frischwassers im Gehäuse 10 verstanden werden, insbesondere wenigstens ein Bereich stromab der Temperiereinheit 16.

Im vorliegenden Ausführungsbeispiel erfolgt die Entnahme des temperierten Frischwassers durch die Oberseite 36 der Getränkezubereitungsvorrichtung, wodurch der Wasserpfad 80 aus der Oberseite 36 austritt. Selbstverständlich ist die Entnahme ebenfalls auch durch eine hier nicht dargestellte Schnellkupplung in der Seitenwand 10.1, 10.2, 10.3 oder 10.4 der Getränkezubereitungsvorrichtung möglich, wodurch der Wasserpfad 80 dann aus einer Seitenwand 10.1, 10.2, 10.3, 10.4 austritt.

Weiterhin umfasst die Getränkezubereitungsvorrichtung eine Wasserbereitstellungseinheit 12, welche zum Vorhalten von Frischwasser vorgesehen ist, eine Wasseraufnahmeeinheit 14, welche zum Aufnehmen von Abwasser vorgesehen ist, eine Temperiereinheit 16, welche zum Temperieren des Frischwassers vorgesehen ist, eine Wasserentnahmeeinheit 18, welche zum Entnehmen von temperiertem Frischwasser aus der Temperiereinheit 16 vorgesehen ist, und einer Transporteinheit 20, welche zum Zuführen des Frischwassers aus der Wasserbereitstellungseinheit 12 über die Temperiereinheit 16 in die Wasserentnahmeeinheit 18 vorgesehen ist. Ebenfalls umfasst die Getränkezubereitungsvorrichtung eine Schalteinrichtung 22, welche zur Aktivierung zumindest einer Einheit 12, 14, 16, 18, 20 vorgesehen ist, Die Einheiten 12, 14, 16, 18, 20 der Getränkezubereitungsvorrichtung sind in einem Gehäuse 10 zusammengefasst. Vorzugsweise ist das Gehäuse 10 in vorliegendem Ausführungsbeispiel quaderförmig ausgeführt, wobei jedoch auch andere einem Fachmann als sinnvoll erscheinende Gehäuseformen denkbar sind.

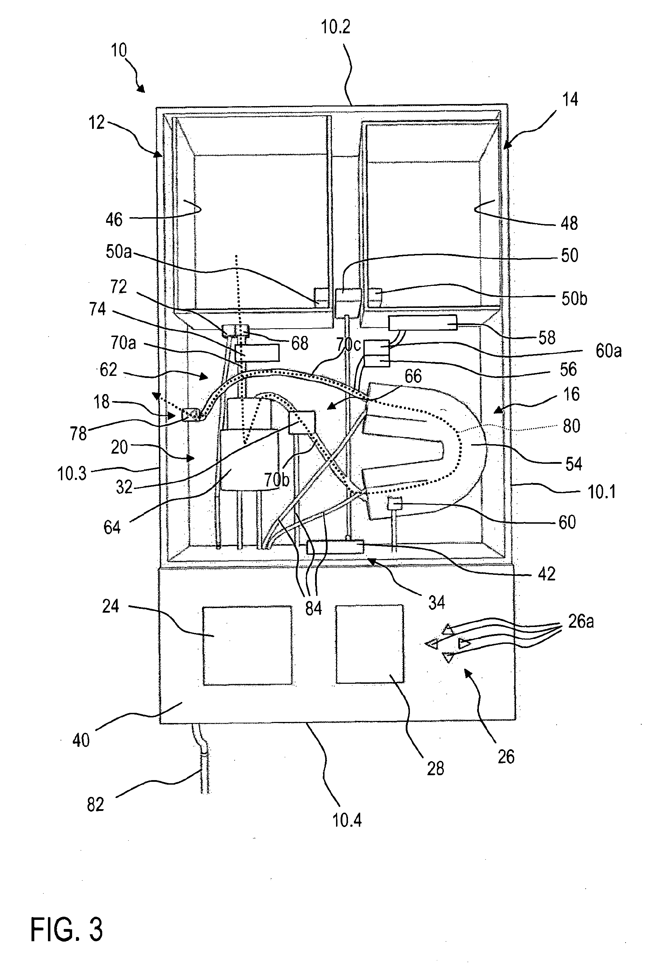

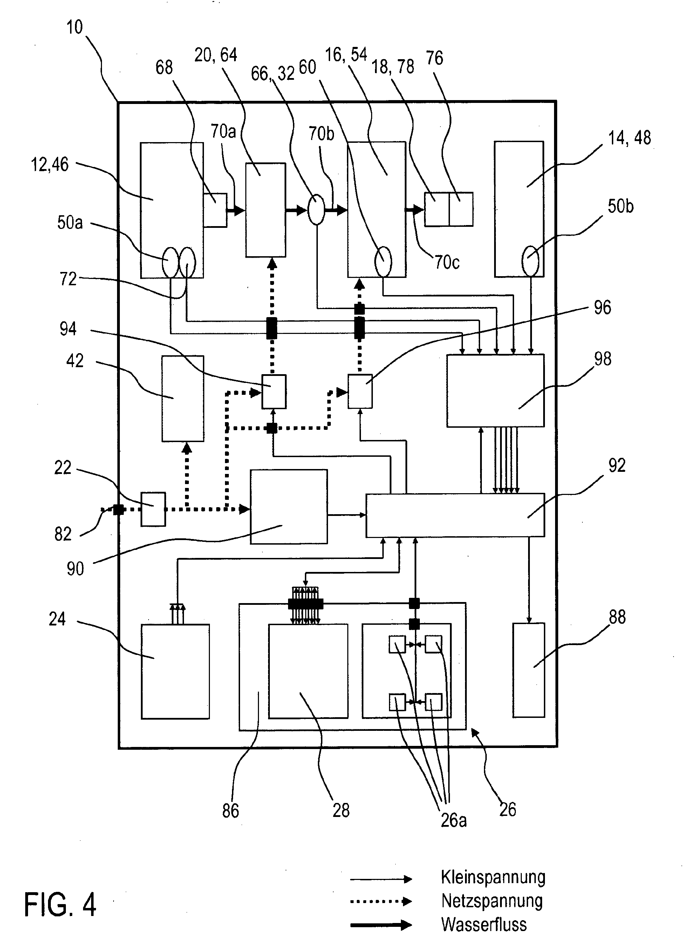

Die oben genannten Einheiten 12, 14, 16, 18, 20 der Getränkezubereitungsvorrichtung stehen gemäß Fig. 3 und 4 in einer Wirkverbindung zueinander bzw. sind funktional miteinander verbunden, d.h. die Wasserbereitstellungseinheit 12 ist mit der Transporteinheit 20 gekoppelt, welche wiederum mit der Temperiereinheit 16 verbunden ist, die wiederum mit der Wasserentnahmeeinheit 18 gekoppelt ist, welche wiederum mit der Wasseraufnahmeeinheit 14 in Verbindung steht. D.h. das Frischwasser durchläuft vier Einheiten 12, 20, 16, 18 der Getränkezubereitungsvorrichtung bevor es zu einem Getränk zubereitet wird, wobei ein Teil des Frischwassers als Abwasser in der Wasseraufnahmeeinheit 14 aufgenommen wird.

In diesem Zusammenhang soll unter Getränk vorzugsweise ein Heißgetränk, wie beispielsweise Tee, verstanden werden, das in der Getränkezubereitungsvorrichtung in allen Wärmegraden hergestellt werden kann. Selbstverständlich ist auch eine Zubereitung kühler Getränke möglich, sofern gekühltes Frischwasser verwendet wird, da die Getränkezubereitungsvorrichtung im vorliegenden Ausführungsbeispiel nicht über eine Kühlungseinheit verfügt, die jedoch integrierbar ist.

In der Getränkezubereitungsvorrichtung ist eine Wiegeeinrichtung 24 zum Abwiegen einer Getränkezutatmenge vorgesehen. Die Wiegeeinrichtung 24 kann flächenbündig in der Oberseite 36 der Getränkezubereitungsvorrichtung integriert sein oder z.B. innerhalb des Gehäuses 10 untergebracht sein, etwa in einer Schublade in einer Seitenwand.

Die Getränkezubereitungsvorrichtung weist gemäß Fig. 1 bis 4 eine Einstelleinrichtung 26 zum Einstellen von Parameterwerten zur Getränkezubereitung auf. Bei den Parameterwerten handelt es sich um die Wassertemperatur, die Ziehzeit des Getränks, die Wassermenge und/oder die auf eine definierte Wassermenge bezogene Getränkezutatmenge. Im vorliegenden Ausführungsbeispiel umfasst die Einstelleinrichtung 26 vier in die Oberseite 36 eingelassene Tasten 26a, die rautenförmig zueinander angeordnet sind und geringfügig gegenüber der Fläche der Oberseite 36 überstehen. Selbstverständlich sind auch weitere, einem Fachmann als sinnvoll erscheinende Tasten 26a oder Bedienelemente, wie beispielsweise ein berührungssensitives Feld oder ein Touchscreen Feld, zur Bedienung der Einstelleinrichtung 26 denkbar. Über die Einstelleinrichtung 26 können die Getränkezubereitungsvorrichtung und einzelne Einheiten oder Programme aktiviert bzw. deaktiviert werden. Mit bestimmten Tastenkombinationen der Einstelleinrichtung 26 können beispielsweise verschiedene Parameter oder Funktionen sofort aktiviert bzw. deaktiviert werden oder es kann eine NotAbschaltung erfolgen.

Über die Einstelleinrichtung 26 kann eine Schnellwahl eines Zubereitungsprogramms durch Eingabe eines Parameter-Codes getroffen werden, der auf der Verpackung der Getränkezutatmenge aufgedruckt werden kann. Bei einem fünfstelligen Buchstabencode kann beispielsweise der erste Buchstabe für die Wassertemperatur stehen, so dass jeder der sechsundzwanzig Buchstaben des deutschen Alphabets für eine von sechsundzwanzig möglichen Wassertemperatureinstellungen steht. Diese können einzelnen definiert oder über eine mathematische Funktion festgelegt werden. Analog dazu kann der zweite Buchstabe des Parameter-Codes für die auf eine definierte Wassermenge bezogene Getränkezutatmenge stehen und die folgenden drei Buchstaben des Parameter-Codes für die Ziehzeit des ersten bis dritten Aufgusses.

Verfügt die Getränkezubereitungsvorrichtung über einen RFID-Sender oder einen Code-Scanner und die Verpackung der Getränkezutat über integrierte RFID-Chips oder entsprechende scannbare Codes, können alle Parametereinstellung kontaktlos bzw. durch Scannen der Verpackung der Getränkezutat an die Getränkezubereitungsvorrichtung übertragen werden.

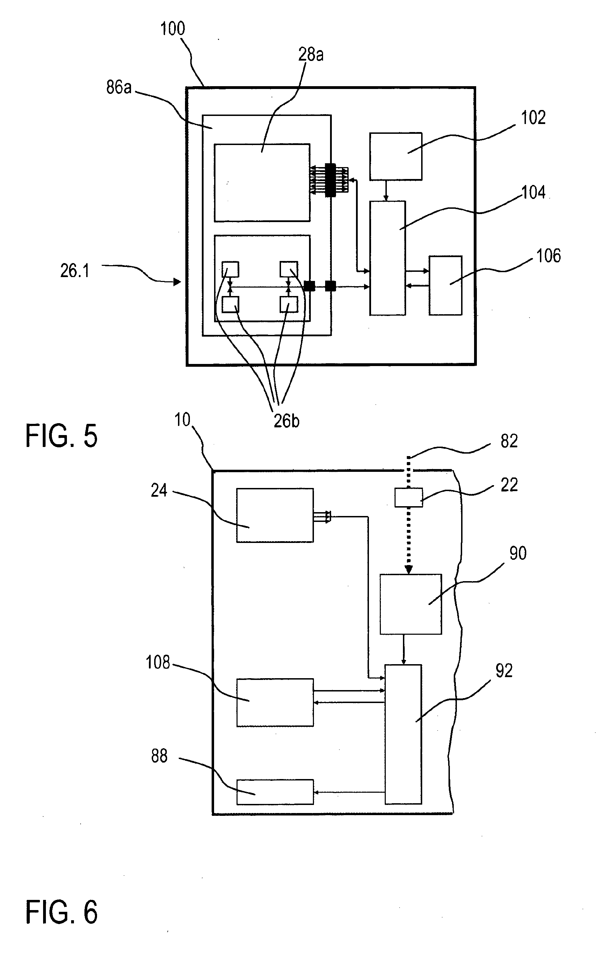

Alternativ oder als Ergänzung zu den Tasten 26a der Einstelleinrichtung 26 kann die Einstellung der Getränkezubereitungsvorrichtung und die Eingabe der Parameter für die Zubereitung der Getränke mit einer Fernsteuerungseinheit 100 gemäß Fig. 5 erfolgen. Wie aus Fig. 5 ersichtlich ist, umfasst die Fernsteuerungseinheit 100 eine Bedieneinheit 86a, die mit einer Anzeigeeinrichtung 28a (z.B. ein Bildschirm) und einer Einstelleinrichtung 26.1 mit Tasten 26b ausgestattet ist. Die Bedieneinheit 86a steht mit einem Mikrocontroller 104, der von einem Batterieelement 102 gespeist wird, in einer Wirkverbindung und übermittelt über einen Funksender 106 Steuersignale beispielsweise mittels Infrarot, WLAN oder Bluetooth an den Funkempfänger 108 der Getränkezubereitungsvorrichtung gemäß Fig. 6.

Zu besseren Übersicht des Ablaufs bei der Zubereitung des Getränks weist die Getränkezubereitungsvorrichtung eine Anzeigeeinrichtung 28 (z.B. ein Bildschirm) zum Anzeigen der Ist-Parameterwerte und der Soll-Parameterwerte auf. Im vorliegenden Ausführungsbeispiel ist die Anzeigeeinrichtung 28 als Display in der Oberseite 36 integriert, wodurch diese vor Spritzwasser geschützt ist und leicht zu reinigen ist. Vorzugsweise ist die Anzeigeeinrichtung 28 mit einem akustischen und/oder optischen Warnsignal ausgestattet. Die Ausgabe des akustischen Warnsignals erfolgt über einen Lautsprecher 88, der seitlich in der vertikalen Seitenwand 10. 4 des Gehäuses 10 angeordnet ist. Der Anwender kann bei der Zubereitung eines Getränks, wie beispielsweise Tee, nach der eingestellten Ziehzeit über das Display der Anzeigeeinrichtung 28 und/oder über ein akustisches Signal des Lautsprechers 88 auf das Ende der Ziehzeit hingewiesen werden. Außerdem kann der Anwender weitere Informationen über das zubereitete Getränk, wie beispielsweise häufig verwendete Parametereinstellungen oder Fakten zur historischen Entwicklung des Getränks über das Display der Anzeigeeinrichtung 28 und/oder den Lautsprecher 88 abfragen.

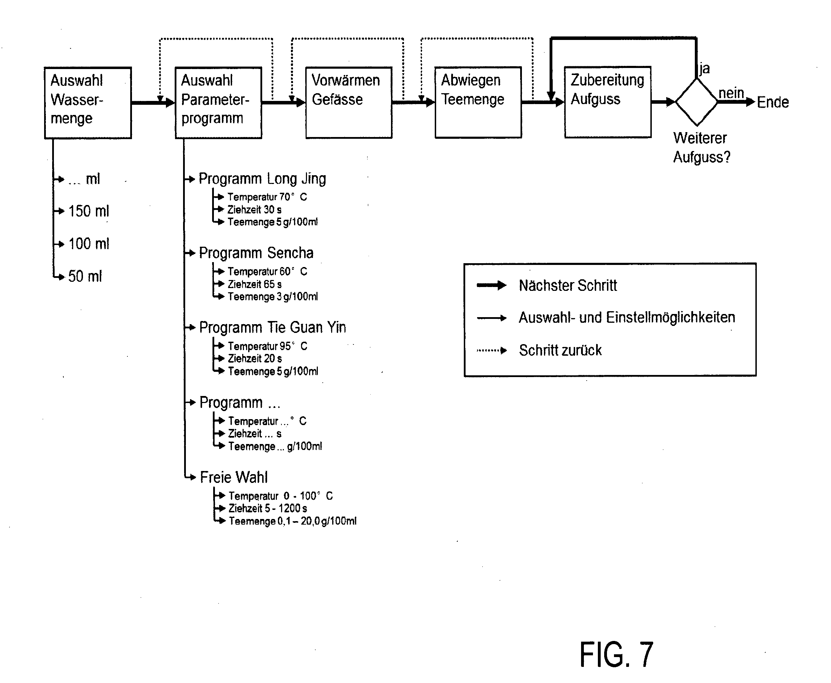

In der Getränkezubereitungsvorrichtung ist zur Zubereitung eines Teeaufgusses gemäß Fig. 7 beispielsweise ein Ablauf im Menü der Einstelleinrichtung 26 als Programm hinterlegt. Bevor der Ablauf des Programms gestartet wird, überprüft der Anwender, ob in der Wasserbereitstellungseinheit 12 ausreichend Frischwasser vorhanden ist, ob die Wasseraufnahmeeinheit 14 genügend Wasser aufnehmen kann und, ob ein Netzkabel 82 mit einer Steckdose verbunden ist. Nach der Überprüfung wird die Getränkezubereitungsvorrichtung über die Schalteinrichtung 22 eingeschaltet. Als erstes wird über die Tasten 26a der Einstelleinrichtung 26 das Menü geöffnet. Das Menü zeigt im Display der Anzeigeeinrichtung 28 den ersten Schritt, in welchem die Auswahl der Wassermenge festgelegt wird, dann wird aus der Auswahl der Parameterprogramme ein Parameterprogramm ausgewählt, dann erfolgt der Hinweis an den Anwender, die Gefäße 110 vorzuwärmen. Während die Gefäße 110 aufgewärmt werden, folgt wiederum ein Hinweis, die Teemenge abzuwiegen, die anschließend in das vorgewärmte Gefäß 110 eingefüllt wird. Nach diesen Schritten erfolgt die Zubereitung des ersten Aufgusses mit der anschließenden Wahlmöglichkeit, diesen zu wiederholen oder den Vorgang der Zubereitung eines weiteren Aufgusses zu beenden. Jede Auswahl und Einstellung der einzelnen Schritte kann korrigiert bzw. geändert werden, da der Anwender nach jedem Schritt die Wahlmöglichkeit erhält, einen Schritt vorwärts oder einen Schritt zurück zu gehen, um dann die Eingabe zu korrigieren. Der Ablauf der Zubereitung eines Aufgusses für Tee oder ein anderes Getränks kann automatisch oder manuell erfolgen und kann jederzeit unterbrochen bzw. fortgesetzt werden. Ebenfalls können alle Parameter, wie beispielsweise, Wassertemperatur, Ziehzeit des Tees, Wassermenge und Teemenge pro 100m1 Frischwasser, Zeit zwischen den Schritten etc. verändert werden.

Damit der Anwender neue Rezepturen zur Zubereitung von Getränken kaufen und aus einem Speichermedium auslesen oder auf diesem abspeichern kann, weist die Getränkezubereitungsvorrichtung eine Speichereinrichtung 30 auf, in welcher zumindest ein Programm zur Herstellung eines Getränks hinterlegbar und auslesbar ist. Die Speichereinrichtung 30 befindet sich in der dem Anwender zugewandten vertikalen Seitenwand 10.1 des Gehäuses 10 und dadurch bedienerfreundlich angeordnet und vor Spritzwasser geschützt.

Mit dem Funksender und Funkempfänger 108 der Getränkezubereitungsvorrichtung kann der Anwender die Getränkezubereitungsvorrichtung mit einem Computer mit entsprechendem Funksender und Funkempfänger verbinden. Über diesen Weg lassen sich weitere Rezepturen zur Zubereitung von Getränken oder Hintergrundinformationen zu den Getränken abspeichern und die Software des Geräts kann aktualisiert werden. Die Kommunikation mit einem Computer kann selbstverständlich auch auf weitere, einem Fachmann als sinnvoll erscheinende Weisen wie einer In-System-Programmierung oder einer Kabelverbindung z.B. zu einer USB Schnittstelle umgesetzt werden.

Die Getränkezubereitungsvorrichtung weist eine Dosiereinrichtung 32 zum Abgeben von Frischwasser in einer definierten Menge auf. Vorzugsweise ist die Dosiereinrichtung 32 zwischen der Transporteinheit 20 und der Temperiereinheit 16 in die Wassereinleitung 70b integriert. Durch die genaue Messung der Frischwassermenge in der Dosiereinrichtung 32 ist ein genaues Einstellen des Verhältnisses zwischen der Getränkezutatmenge und der Frischwassermenge möglich.

Wird über die Dosiereinrichtung 32 erkannt, dass kein Frischwasser zur Verfügung steht und daher kein Frischwasser gefördert werden kann, entweder weil sich im Frischwasserbehälter 46 kein Wasser befindet oder weil kein Anschluss an das Frischwassersystem des Hauses besteht, wird die Transporteinheit 20 abgeschaltet.

Die Schalteinrichtung 22 und/oder die Wiegeeinrichtung 24 und/oder die Einstelleinrichtung 26 und/oder die Anzeigeeinrichtung 28 und/oder die Speichereinrichtung 30 und/oder die Dosiereinrichtung 32 wirken zumindest teilweise zusammen. Sobald der Anwender das Netzteil 90 der Getränkezubereitungsvorrichtung über die Schalteinrichtung 22 aktiviert, werden alle Einrichtungen 24, 26, 28, 30, 32 und alle Einheiten 12, 14, 16, 18, 20 in Betriebsbereitschaft versetzt und die Getränkezubereitungsvorrichtung kann verwendet werden. Über die Einstelleinrichtung 26 kann ein automatischer oder manueller Ablauf einer Getränkezubereitung aktiviert werden, bei welchen einzelne oder mehrfache Vorgänge bzw. Aufgüsse erfolgen können. Ebenfalls ist über die Einstelleinrichtung 26 zu jeder Zeit ein Deaktivieren der im Prozess befindlichen Vorgänge möglich. Die erfolgten Einstellungen und der anschließende Vorgangsablauf werden in der Anzeigeeinrichtung 28 in Echtzeit angezeigt.

Die Oberseite 36 des Gehäuses 10 ist als Arbeitsfläche zum Abstellen und Befüllen von einem oder mehreren Gefäßen 110 mit temperiertem Frischwasser vorgesehen und umfasst beispielsweise zumindest zwei Oberflächenelemente 38, 40, wobei ein erstes Oberflächenelement 38 von dem Gehäuse 10 abnehmbar und wasserdurchlässig und ein zweites Oberflächenelement 40 fest mit dem Gehäuse 10 verbunden und wasserundurchlässig ausgeführt ist. Die beiden Oberflächenelemente 38, 40 sind flächenbündig nebeneinander angeordnet und bilden eine einheitliche Ebene, die im Design schlicht und ansprechend ausgebildet ist. Entsprechend der Funktion ist das erste Oberflächenelement 38 gitterförmig, rillenförmig oder noppenförmig und weist eine gute Wärmeleitfähigkeit auf. Die Zubereitung der Getränke erfolgt vorzugsweise auf dem als Arbeitsfläche ausgebildeten ersten Oberflächenelement 38, das mit einer wasserabweisenden Beschichtung mit Lotuseffekt versehen werden kann, so dass Wasser und Schmutzpartikel schneller und sicherer in die Wasseraufnahmeeinheit 14 transportiert werden können. Hierdurch ist das gitterförmige erste Oberflächenelement 38 leicht und hygienisch sauber zu halten, wodurch sich der nachträgliche Reinigungsaufwand deutlich reduziert. Zudem umfasst das erste Oberflächenelement 38 vorzugsweise zumindest eine Oberflächenöffnung 38a, durch welche Abfallmaterial in die Wasseraufnahmeeinheit 14 spülbar ist.

Das zweite Oberflächenelement 40 weist eine nahezu geschlossene Glasfläche oder Kunststofffläche auf, die mit Durchbrüchen für die Wiegeeinrichtung 24 und die Einstelleinrichtung 26 versehen ist. Unterhalb des zweiten Oberflächenelement 40 ist die Elektronik der Getränkezubereitungsvorrichtung geschützt untergebracht.

Zur Zubereitung temperatursensibler Getränke werden die zur Getränkezubereitung notwendigen Gefäße 110 und fertigen Aufgüsse auf dem ersten Oberflächenelement 38 aufgewärmt und warmgehalten. Hierzu weist die Getränkezubereitungsvorrichtung gemäß Fig. 2 und 3 eine Warmhalteeinheit 34 zum Warmhalten von Gefäßen 110 zur Getränkezubereitung auf. Diese umfasst ein Heizelement 42, das mit dem ersten Oberflächenelement 38 in Wirkverbindung steht, welches eine gute Wärmeleitfähigkeit aufweist, wobei vorzugsweise zwischen dem ersten Oberflächenelement 38 und dem Heizelement 42 ein Wärmeübertragungselement 44 vorgesehen ist. Das Heizelement 42 und das Wärmeübertragungselement 44 dienen zugleich als Auflagefläche für das erste Oberflächenelement 38, wodurch die Wärmeübertragung über eine große Kontaktfläche erfolgt.

Sobald der Anwender das Netzteil 90 der Getränkezubereitungsvorrichtung über die Schalteinrichtung 22 aktiviert, erwärmt das Heizelement 42 über ein Wärmeübertragungselement 44 das erste Oberflächenelement 38 derart, dass die darauf stehenden Gefäße 110 erwärmt und warm gehalten werden können, wodurch sich das Aroma des Getränks besser entfalten kann. Das Heizelement 42 weist einen positiven Temperaturkoeffizienten auf, so dass es beim Einschalten schnell auf eine ab Werk eingestellte Temperatur geregelt wird. Bei der Zubereitung von kühlen Getränken kann der Anwender die Funktion des Heizelementes 42 deaktivieren. Alternativ kann der Anwender die Gefäße 110 auf schnelle Weise mit temperiertem Frischwasser der Getränkezubereitungsvorrichtung vorwärmen.

Vorzugsweise ist die Wiegeeinrichtung 24 zumindest teilweise in das zweite Oberflächenelement 40 des Gehäuses 10 integriert. Mit der Wiegeeinrichtung 24 kann der Anwender die zur Zubereitung von Getränken notwendige Getränkezutatmenge, wie beispielsweise die erforderliche Teemenge beim Tee, in unmittelbarer Reichweite des Anwenders abwiegen. Unterstützt wird er dabei durch das Display der Anzeigeeinrichtung 28, auf dem die Soll masse und die Istmasse angegeben werden. Die Sollmasse berechnet sich aus der Teemenge pro 100m1 Wassermenge und der eingestellten Frischwassermenge. Über die Tasten 26a der Einstelleinrichtung 26 kann der Nutzer die Taraeinstellung der Wiegeeinrichtung 24 verändern. Da die Wiegeeinrichtung 24 flächenbündig mit der Fläche des zweiten Oberflächenelementes 40 abschließt, ist dieser Bereich leicht zu reinigen und die zusätzlich gekapselte Elektronik der Wiegeeinrichtung 24 ist vor Spritzwasser und Staubpartikel geschützt untergebracht.

Die Wasserbereitstellungseinheit 12 weist einen Frischwasserbehälter 46 und die Wasseraufnahmeeinheit 14 einen Abwasserbehälter 48 auf, wobei die Wasserbehälter 46, 48 herausnehmbar in dem Gehäuse 10 aufgenommen sind. Im vorliegenden Ausführungsbeispiel sind die Wasserbehälter 46, 48 als ein Sammelvolumen ausgebildet, die für die Aufnahme von Frischwasser bzw. Abwasser vorgesehen sind. Diese sind beispielsweise als schubladenartige Behälter in das Gehäuse 10 einschiebbar und aus dem Gehäuse 10 entfernbar bzw. entleerbar ausgebildet. Die Wasserbehälter 46, 48 weisen in eingeschobenem Zustand eine Rastfunktion auf. Um die vorzugsweise rechteckig ausgeführten Wasserbehälter 46, 48 zu entnehmen, löst der Anwender die Verrastung, indem er von außen auf die Seitenwand der Wasserbehälter 46, 48 drückt. Hierdurch kommen die Wasserbehälter 46, 48 soweit aus dem Gehäuse 10 heraus, dass sie entnehmbar sind. Selbstverständlich sind auch weitere einem Fachmann als sinnvoll erscheinende Funktionsarten zur Bedienung der schubladenartigen Wasserbehälter 46, 48 denkbar.

Die Wasserbereitstellungseinheit 12 und/oder die Wasseraufnahmeeinheit 14 weist eine Messeinrichtung 50 zur Messung des Füllstands in zumindest einem Wasserbehälter 46, 48 auf, wobei vorzugsweise die Messeinrichtung 50 zumindest einen Schwimmer 50a, 50b aufweist. Vorzugsweise ist die Messeinrichtung 50 zwischen den Schwimmern 50a, 50b und den Wasserbehältern 46, 48 angeordnet und ermöglicht zeitgleich eine Messung des Füllstands in beiden Wasserbehältern 46, 48. Hierbei sind die Schwimmer 50a, 50b jeweils in einem Eckbereich des Frischwasserbehälters 46 der Wasserbereitstellungseinheit 12 und des Abwasserbehälters 48 der Wasseraufnahmeeinheit 14 angeordnet. Die Wandung der beiden Wasserbehälter 46, 48 trennt die Schwimmer 50a, 50b von der Messeinrichtung 50. Im vorliegenden Ausführungsbeispiel werden die Füllstände des Wassers in den Wasserbehältern 46, 48 über Reed-Kontakte gemessen. Alternativ kann die Messung der Füllstände über bekannte Methoden, wie eine Abstandmessung zwischen Wasseroberfläche und einem über der Wasseroberfläche angebrachtem Laserinterferometer oder wie die Änderung der Kapazität eines Plattenkondensators, bei Änderung der Wassermenge mit einer von Luft abweichenden Dielektrizitätskonstanten zwischen den beiden Platten, erfolgen.

Wenn der Wasservorratsbehälter 46 der Wasserbereitstellungseinheit 12 nicht ausreichend Wasser für die Zubereitung der Getränke oder der Abwasserbehälter 48 der Wasseraufnahmeeinheit 14 nicht genügen freies Aufnahmevolumen für verbrauchtes Wasser aufweist, wird die Transporteinheit 20 nicht aktiviert.

Die Wasseraufnahmeeinheit 14 weist eine Wasserablauffläche 52 mit einer Ablauföffnung 52a auf, die in den Abwasserbehälter 48 mündet, wobei vorzugsweise die Wasserablauffläche 52 unterhalb des ersten Oberflächenelementes 38 angeordnet ist. Zweckmäßigerweise ist die Flächengröße der Wasserablauffläche 52 mit der Flächengröße des ersten Oberflächenelementes 38 bis auf die Flächengröße des Wärmeübertragungselements 44 deckungsgleich, wodurch das vom Anwender ausgeschüttete Wasser und das aus dem Wasserhahn 76 fließende Frischwasser gänzlich durch die trichterförmige Wasserablauffläche 52 in den Abwasserbehälter 48 geleitet wird.

Der Wasserhahn 76 kann beispielsweise drehbar sein, und/oder höhenverstellbar sein oder eine feste Höhe aufweisen. Für die Entnahme des temperierten Frischwassers kann der Wasserhahn 76 entweder über die Oberseite 36, gemäß Fig. 1, oder eine Seitenwand 10.1, 10.2, 10.3, 10.4 des Gehäuses 10 an die Getränkezubereitungsvorrichtung angeschlossen werden.

Im vorliegenden Beispiel weist die Temperiereinheit 16 einen Durchlauferhitzer 54 auf, wobei auch andere einem Fachmann als sinnvoll erscheinende Temperiereinheiten 16 zur Erwärmung des Frischwassers denkbar sind. Aktiviert der Anwender über die Einstelleinrichtung 26 den Durchlauferhitzer 54, so wird der Durchlauferhitzer 54 auf die eingestellte Wassertemperatur aufgeheizt. Dazu regelt der Mikrocontroller 92 die mittlere Leistung des Durchlauferhitzers 54 in Abhängigkeit der Temperaturdifferenz zwischen der eingestellten Frischwassertemperatur und der von der Sensoreinheit 60 gemessenen aktuellen Temperatur des Durchlauferhitzers 54, bis diese Temperaturdifferenz einen ab Werk eingestellten Schwellenwert unterschritten hat, woraufhin der Mikrocontroller 92 die Aktivierung der Wasserpumpe 64 durch den Anwender über die Einstelleinrichtung 26 erlaubt. Für die Regelung der mittleren Leistung wird das Relais 96 durch den Mikrocontroller 92 kurzzeitig auf Stromfluss geschalten, so dass im mit dem Relais 96 über die elektrischen Leitungen 84 verbundenen Durchlauferhitzer 54 elektrische Energie in Wärmeenergie umgewandelt wird. Durch Variation der Zeiträume mit und ohne Stromfluss kann jede mittlere Leistung bis zur Maximalleistung des Durchlauferhitzers 54 eingestellt werden.

Aktiviert der Anwender über die Einstelleinrichtung 26 die Wasserpumpe 64, so wird die mittlere Leistung des Durchlauferhitzers 54 durch den Mikrocontroller 92 gesteuert in Abhängigkeit von der eingestellten Frischwassertemperatur, von der Förderleistung der Wasserpumpe 64, von der Frischwassertemperatur des Frischwassers im Frischwasserbehälter 46 und von der Menge des seit Aktivierung der Wasserpumpe 64 bereits durch den Durchlauferhitzer 54 geflossenen Frischwassers. Auf Grund der hohen Wärmekapazität des Durchlauferhitzers 54 und der damit verbundenen Trägheit bei der Temperaturänderung, entspricht das Ergebnis im zeitlichen Mittel dem, das mit dauerhaft geringerer elektrischer Leistung erzielt worden wäre.

Ändert der Anwender die Einstellung der Wassertemperatur, wird der Durchlauferhitzer 54 weiter erhitzt oder durch Warten abgekühlt. Zur schnellen Abkühlung kann zusätzlich die Erhitzung des Durchlauferhitzers 54 über die Einstelleinrichtung 26 deaktiviert und die Wasserpumpe 64 aktiviert werden. Das durch den Durchlauferhitzer 54 fließende Frischwasser wird erwärmt und kühlt damit den Durchlauferhitzer 54 ab.

Zudem steht der Durchlauferhitzer 54 über ein Überlaufventil 56 mit dem Abwasserbehälter 48 in Verbindung und weist eine Sensoreinheit 60a zur Erkennung der Temperatur auf. Zwischen dem Überlaufventil 56 und dem Abwasserbehälter 48 ist ein Zwischenspeicher 58 angeordnet. Dehnt sich das temperierte Frischwasser auf Grund der Erwärmung im Durchlauferhitzer 54 aus und verdrängt darin das Frischwasser, so fließt dieses über ein Überlaufventil 56 in einen Zwischenspeicher 58, der mit dem Abwasserbehälter 48 verbunden ist.

Zum Befördern des Frischwassers umfasst die Transporteinheit 20 ein Wasserleitungssystem 62 und eine in das Wasserleitungssystem 62 eingebundene Wasserpumpe 64, wobei das Wasserleitungssystem 62 dazu vorgesehen ist, die Wasserbereitstellungseinheit 12 über die Temperiereinheit 16 mit der Wasserentnahmeeinheit 18 zu verbinden.

Aktiviert der Anwender über die Einstelleinrichtung 26 beispielsweise die Wasserpumpe 64 der Transporteinheit 20, beginnt diese Frischwasser aus dem Frischwasserbehälter 46 der Wasserbereitstellungseinheit 12, durch die Wasserleitung 70a des Wasserleitungssystems 62, durch die Wasserpumpe 64 der Transporteinheit 20, durch die Wasserleitung 70b des Wasserleitungssystems 62, durch die Dosiereinrichtung 32, durch den Durchlauferhitzer 54 der Temperiereinheit 16, durch die Wasserleitung 70c des Wasserleitungssystems 62, durch die Schnellkupplung 78 und den Wasserhahn 76 zu fördern. Nachdem die Wasserpumpe 64 die eingestellte Frischwassermenge gefördert hat, schaltet sie automatisch ab. Die Messung der Frischwassermenge erfolgt entweder über die Dosiereinrichtung 32 oder über Messung der Förderzeit der Wasserpumpe 64 bei bekannter Fördermenge pro Zeiteinheit. Ist unter dem Wasserhahn 76 kein oder ein zu kleines Gefäß 110 positioniert bzw. die temperierte Frischwassermenge zu groß eingestellt, so läuft das temperierte Frischwasser durch das wasserdurchlässige erste Oberflächenelement 38, dann durch die trichterförmige wasserundurchlässige Ablauföffnung 52a der Wasserablauffläche 52 und von dort in den Abwasserbehälter 48 der Wasseraufnahmeeinheit 14. Zudem lässt sich die Wasserpumpe 64 jederzeit über die Tasten 26a der Einstelleinrichtung 26 abstellen.

Um einen Verlust der temperierten Frischwassermenge zu vermeiden, bzw. um die gewünschte temperierte Frischwassermenge genau zu dosieren, weist die Transporteinheit 20 eine Sensoreinrichtung 66 zur Erkennung der Durchflussmenge zwischen der Wasserpumpe 64 und dem Durchlauferhitzer 54 auf.

Wird die Getränkezubereitungsvorrichtung für viele Gäste im privaten Bereich oder in der Gastronomie eingesetzt, wird viel Frischwasser verbraucht. Für diesen Fall umfasst die Transporteinheit 20 eine Kupplung 68, die zwischen der Wasserbereitstellungseinheit 12 und einer Wasserleitung 70a des Wasserleitungssystems 62 angeordnet ist, wobei vorzugsweise die Kupplung 68 einen Adapter zum Anschluss an das Frischwassersystem des Hauses und/oder einen Temperatursensor 72 umfasst. Hierdurch ist die Getränkezubereitungsvorrichtung schnell und problemlos auf größeren Frischwasserverbrauch umrüstbar, indem der Frischwasserbehälter 46 der Wasserbereitstellungseinheit 12 herausgenommen wird und das Frischwassersystem des Hauses an den Adapter der Kupplung 68 angeschlossen wird. Ebenso ist die Wasseraufnahmeeinheit 14 an ein Abwassersystem eines Hauses anschließbar. Für diese Anbindung werden die bestehenden Adapter als Anschlüsse für den Abwasserbehälter 48 und den Frischwasserbehälter 46 verwendet. Zusätzlich ist zwischen Kupplung 68 der Wasserbereitstellungseinheit 12 und der Wasserpumpe 64 der Transporteinheit 20 eine Filtereinrichtung mit Druckminderer 74 eingebaut, um Kalk oder andere Mineralien herauszufiltern und, um den Wasserdruck des Frischwassers des Frischwassersystem auf ein für die Wasserpumpe 64 verträgliches Niveau abzusenken.

Die Wasserentnahmeeinheit 18 umfasst einen Wasserhahn 76, der fest oder abnehmbar an dem Wasserleitungssystem 62 angeordnet ist. Im vorliegenden Ausführungsbeispiel ist der Wasserhahn 76 über eine Schnellkupplung 78 an einer Wasserleitung 70c des Wasserleitungssystems 62 anbringbar und kann in der Getränkezubereitungsvorrichtung, beispielsweise im Frischwasserbehälter 46 der Wasserbereitstellungseinheit 12 verstaut werden. Der Wasserhahn 76 kann fest, flexibel oder höhenverstellbar sein. Der Wasserhahn 76 kann zusätzlich mit einem hier nicht dargestellten Sensor und/oder Schalter versehen sein, der die Wasserentnahme aktiviert.

Wie aus Fig. 4 ersichtlich ist, stehen die Bedieneinheit 86, welche die Anzeigeeinrichtung 28 und die Einstelleinrichtung 26 umfasst, und die Wiegeeinrichtung 24 in Wirkverbindung mit dem Mikrocontroller 92, der die Informationen erfasst und an das Relais 96 der Temperiereinheit 16 und an das Relais 94 der Transporteinheit 20 sendet. Die Relais 94, 96 aktivieren oder deaktivieren die Temperiereinheit 16 bzw. die Transporteinheit 20. Die elektrische Versorgung des Mikrocontrollers 92 und anderer elektronischer Bauteile erfolgt über das mit dem Netzkabel 82 verbundene Netzteil 90 der Getränkezubereitungsvorrichtung mit in der Elektrotechnik typischer Kleinspannung. Das Gehäuse 10 der Getränkezubereitungsvorrichtung umfasst im dargestelltem Ausführungsbeispiel eine Wasserbereitstellungseinheit 12, bestehend aus einem Frischwasserbehälter 46, einem Schwimmer 50a und einem Temperatursensor 72, wobei die Wasserbereitstellungseinheit 12 über eine Kupplung 68 mit der Wasserpumpe 64 der Transporteinheit 20 verbunden ist. Die Transporteinheit 20 ist wiederum über eine Dosiereinrichtung 32 mit dem Durchlauferhitzer 54 der Temperiereinheit 16 verbunden, welche eine Sensoreinheit 60 aufweist. Weiterhin ist die Temperiereinheit 16 über die Schnellkupplung 78 der Wasserentnahmeeinheit 18 mit dem Wasserhahn 76 verbunden. Zudem ist im Gehäuse 10 ein Abwasserbehälter 48 der Wasseraufnahmeeinheit 14 angeordnet.

Die Sensoren 50a, 72, 32, 60, 60a, 50b der Einheiten 12, 20, 16, 18, 14 und der Dosiereinrichtung 32 übertragen ihre Signale über die Elektronikeinheit 98 an den Mikrocontroller 92, der die empfangenen Informationen zur Ermittlung der aktuellen Situation auswertet. In Abhängigkeit dieser Informationen und der über die Einstelleinrichtung 26 getätigten Einstellungen des Anwenders ermittelt der Mikrocontroller 92, ob eine Änderung der Anzeige der Anzeigeeinrichtung und ob eine Aktivierung oder Deaktivierung einer oder mehrere Einheiten 12, 20, 16, 18, 14 oder des Lautsprechers 88 erforderlich ist oder nicht. Beispielhaft sind Steuersignalpfade mit Kleinspannungen durch dünne Pfeillinien und Signalpfade mit Netz- oder Betriebsspannung mit dick gepunkteten Pfeillinien gezeichnet. Der Wasserfluss ist beispielhaft mit dicken, durchgezogenen Pfeillinien angedeutet.

Zum Transport und zur Aufbewahrung weist die Getränkezubereitungsvorrichtung ein im Gehäuse 10 vorgesehenes Ladevolumen zum Verstauen von Gegenständen, wie beispielsweise den abgekuppelten Wasserhahn 76, Zubehör, Gefäße 110 etc. auf.

## Patentansprüche

1. Getränkezubereitungsvorrichtung mit wenigstens einer Temperiereinheit (16), welche zum Temperieren von Frischwasser vorgesehen ist, einer Wasserentnahmeeinheit (18), welche zum Entnehmen von temperiertem Frischwasser aus der Temperiereinheit (16) vorgesehen ist, einer Transporteinheit (20), welche zum Zuführen des Frischwassers aus einer Wasserbereitstellungseinheit (12) über die Temperiereinheit (16) in die Wasserentnahmeeinheit (18) vorgesehen ist, einer Schalteinrichtung (22), welche zur Aktivierung zumindest einer Einheit (12, 16, 18, 20) vorgesehen ist, wobei wenigstens die Temperiereinheit (16) in einem Gehäuse (10) mit Gehäusewänden (10.1, 10.2, 10.3, 10.4, 10.5) angeordnet ist, welches eine Oberseite (36) aufweist, wobei ein Wasserpfad (80) zur Entnahme des temperierten Frischwassers eine Gehäusewand (10.1, 10.2, 10.3, 10.4, 10.5) durchstößt,
**dadurch gekennzeichnet, dass** der Wasserpfad (80) im bestimmungsgemäßen Zustand wenigstens bereichsweise oberhalb der Oberseite (36) verläuft, und oberhalb der Oberseite (36) endet,
wobei das Gehäuse (10) der Getränkezubereitungsvorrichtung flach und tablettartig ausgebildet ist und die Oberseite (36) der Getränkezubereitungsvorrichtung als Arbeitsfläche zum Abstellen und Befüllen von einem oder mehreren Gefäßen (110) mit temperiertem Frischwasser aus dem Wasserpfad (80) vorgesehen ist.

2. Getränkezubereitungsvorrichtung nach Anspruch 1, **dadurch gekennzeichnet, dass** der Wasserpfad (80) aus der Oberseite (36) austritt.

3. Getränkezubereitungsvorrichtung nach Anspruch 1, **dadurch gekennzeichnet, dass** der Wasserpfad (80) aus einer Seitenwand (10.1, 10.2, 10.3, 10.4) austritt.

4. Getränkezubereitungsvorrichtung nach einem der vorhergehenden Ansprüche, **dadurch gekennzeichnet, dass**
- die Wasserbereitstellungseinheit (12)zum Vorhalten von Frischwasser vorgesehen ist,
- eine Wasseraufnahmeeinheit (14) umfasst ist, welche zum Aufnehmen von Abwasser vorgesehen ist, und
- eine Schalteinrichtung (22), welche zur Aktivierung zumindest einer Einheit (12, 14, 16, 18, 20) vorgesehen ist, wobei die Einheiten (12, 14, 16, 18, 20) der Getränkezubereitungsvorrichtung in wenigstens einem Gehäuse (10) zusammengefasst sind.

5. Getränkezubereitungsvorrichtung nach einem der vorhergehenden Ansprüche, **dadurch gekennzeichnet, dass** eine Einstelleinrichtung (26) zumindest zum Einstellen von Parameterwerten zur Getränkezubereitung vorgesehen ist und/oder eine Anzeigeeinrichtung (28) zumindest zum Anzeigen der Ist-Parameterwerte und der Soll-Parameterwerte vorgesehen ist.

6. Getränkezubereitungsvorrichtung nach einem der vorhergehenden Ansprüche, **dadurch gekennzeichnet, dass** eine Speichereinrichtung (30) vorgesehen ist, in welcher zumindest ein Programm zur Herstellung eines Getränks hinterlegbar und auslesbar ist.

7. Getränkezubereitungsvorrichtung nach einem der vorhergehenden Ansprüche, wobei eine Dosiereinrichtung (32) zum Abgeben von Frischwasser in einer definierten Menge vorgesehen ist.

8. Getränkezubereitungsvorrichtung nach einem der vorhergehenden Ansprüche, **dadurch gekennzeichnet, dass** die Schalteinrichtung (22) und/oder eine Wiegeeinrichtung (24) zum Abwiegen einer Getränkezutatmenge und/oder die Einstelleinrichtung (26) und/oder die Anzeigeeinrichtung (28) und/oder die Speichereinrichtung (30) und/oder die Dosiereinrichtung (32) zumindest teilweise zusammenwirken.

9. Getränkezubereitungsvorrichtung nach einem der vorhergehenden Ansprüche, **dadurch gekennzeichnet, dass** die Oberseite (36) des Gehäuses (10) zumindest zwei Oberflächenelemente (38, 40) umfasst, wobei ein erstes Oberflächenelement (38) von dem Gehäuse (10) abnehmbar und wasserdurchlässig und ein zweites Oberflächenelement (40) fest mit dem Gehäuse (10) verbunden und wasserundurchlässig ausgeführt ist, wobei vorzugsweise das erste Oberflächenelement (38) zumindest eine Öffnung umfasst, durch welche Abfallmaterial in die Wasseraufnahmeeinheit (14) spülbar ist.

10. Getränkezubereitungsvorrichtung nach einem der vorhergehenden Ansprüche, **dadurch gekennzeichnet, dass** die Wasserbereitstellungseinheit (12) einen Frischwasserbehälter (46) und die Wasseraufnahmeeinheit (14) einen Abwasserbehälter (48) aufweist, wobei die Wasserbehälter (46, 48) herausnehmbar in dem Gehäuse (10) aufgenommen sind.

11. Getränkezubereitungsvorrichtung nach einem der vorhergehenden Ansprüche, **dadurch gekennzeichnet, dass** die Wasserbereitstellungseinheit (12) und/oder die Wasseraufnahmeeinheit (14) eine Messeinrichtung (50) zur Messung des Füllstands in zumindest einem Wasserbehälter (46, 48) aufweist.

12. Getränkezubereitungsvorrichtung nach einem der vorhergehenden Ansprüche, **dadurch gekennzeichnet, dass** die Wasseraufnahmeeinheit (14) eine Wasserablauffläche (52) mit einer Ablauföffnung (52a) aufweist, die in den Abwasserbehälter (48) mündet, wobei vorzugsweise die Wasserablauffläche (52) unterhalb des ersten Oberflächenelementes (38) angeordnet ist.

13. Getränkezubereitungsvorrichtung nach einem der vorhergehenden Ansprüche, **dadurch gekennzeichnet, dass** die Temperiereinheit (16) über ein Überlaufventil (56) mit dem Abwasserbehälter (48) in Verbindung steht.

14. Getränkezubereitungsvorrichtung nach einem der vorhergehenden Ansprüche, **dadurch gekennzeichnet, dass** die Transporteinheit (20) eine Sensoreinrichtung (66) zur Erkennung einer Durchflussmenge des Frischwassers aufweist.

15. Getränkezubereitungsvorrichtung nach einem der vorhergehenden Ansprüche, **dadurch gekennzeichnet, dass** die Wasserentnahmeeinheit (18) einen Wasserhahn (76) umfasst, der fest oder abnehmbar oder wegklappbar an dem Gehäuse (10) angeordnet ist.

## Claims

1. Beverage preparation device having at least one tempering unit (16) intended to control the temperature of fresh water, a water withdrawal unit (18) intended to withdraw fresh water from the tempering unit (16), a transport unit (20) intended to feed fresh water from a water supply unit (12) via the tempering unit (16) into the water withdrawal unit (18), a switching device (22) intended for the activation of at least one unit (12, 16, 18, 20), where at least the tempering unit (16) is arranged in a housing (10) with housing walls (10.1, 10.2, 10.3, 10.4, 10.5), having an upper side (36), where a water path (80) penetrates a housing wall (10.1, 10.2, 10.3, 10.4, 10.5) to withdraw the tempered fresh water,
**characterized in that** the water path (80) in its intended state is routed through at least part of the region above the upper side (36) and ends above the upper side (36),
where the housing (10) of the beverage preparation device has a flat, tray-like form and the upper side (36) of the beverage preparation device is intended as a work surface on which to place and to fill one or more containers (110) with tempered fresh water from the water path (80).

2. Beverage preparation device according to claim 1, **characterized in that** the water path (80) exits from the upper side (36).

3. Beverage preparation device according to claim 1, **characterized in that** the water path (80) exits from a side wall (10.1, 10.2, 10.3, 10.4).

4. Beverage preparation device according to any one of the previous claims, **characterized in that**
- the water supply unit (12) is provided for holding fresh water in reserve,
- a water collection unit (14) is provided for storing waste water, and
- a switching device (22) is provided for activating at least one unit (12, 14, 16, 18, 20), where the units (12, 14, 16, 18, 20) of the beverage preparation device are integrated in a housing (10).

5. Beverage preparation device according to any one of the preceding claims, **characterized in that** a controlling device (26) is provided at least for setting parameter values for beverage preparation and/or a display device (28) is provided at least for displaying actual parameter values and the target parameter values.

6. Beverage preparation device according to any one of the preceding claims, **characterized in that** a memory device (30) is provided in which at least one program can be stored and read out to prepare a beverage.

7. Beverage preparation device according to any one of the preceding claims, wherein a dispensing device (32) is provided for dispensing fresh water in a defined quantity.

8. Beverage preparation device according to any one of the preceding claims, **characterized in that** the switching device (22) and/or a weighing device (24) for weighing the quantity of a beverage ingredient and/or the controlling device (26) and/or the display device (28) and/or the storage device (30) and/or the dispensing device (32) at least partially work together.

9. Beverage preparation device according to any one of the preceding claims, **characterized in that** the upper side (36) of the housing (10) comprises at least two surface elements (38, 40), where a first surface element (38) can be removed from the housing (10) and is water permeable, and a second surface element (40) is fixed to the housing (10) and is impermeable to water, where preferably the first surface element (38) comprises at least one opening through which waste material can be rinsed into the water collection unit (14).

10. Beverage preparation device according to any one of the preceding claims, **characterized in that** the water supply unit (12) has a fresh water container (46) and the water collection unit (14) has a waste water container (48), where the water containers (46, 48) are removably contained in the housing (10).

11. Beverage preparation device according to any one of the preceding claims, **characterized in that** the water supply unit (12) and/or the water collection unit (14) has at least one measurement device (50) for measuring the fill level in at least one water container (46, 48).

12. Beverage preparation device according to any one of the preceding claims, **characterized in that** the water collection unit (14) has a water drainage surface (52) with a drainage opening (52a) that leads to the waste water container (48), where preferably the water drainage zone (52) is arranged below the first surface element (38).

13. Beverage preparation device according to any one of the preceding claims, **characterized in that** the tempering unit (16) is connected with the waste water container (48) via an overflow valve (56).

14. Beverage preparation device according to any one of the preceding claims, **characterized in that** the transport unit (20) has a sensor device (66) to detect a flow-through quantity of the fresh water.

15. Beverage preparation device according to any one of the preceding claims, **characterized in that** the water withdrawal unit (18) comprises a water faucet (76) that is arranged on the housing (10) in a fixed or removable manner, or can be folded away.

## Revendications

1. Dispositif de préparation de boissons avec au moins une unité de tempérage (16), qui est prévue pour tempérer l'eau fraîche, une unité de prélèvement d'eau (18), qui est prévue pour prélever de l'eau fraîche tempérée provenant de l'unité de tempérage (16), une unité de transport (20), qui est prévue pour alimenter l'eau fraîche à partir d'une unité de mise à disposition de l'eau (12), en passant par l'unité de tempérage (16) dans l'unité de prélèvement d'eau (18), un dispositif de commutation (22), qui est prévu pour activer au moins une unité (12, 16, 18, 20), sachant qu'au moins l'unité de tempérage (16) est disposée dans un boîtier (10) avec des parois de boîtier (10.1, 10.2, 10.3, 10.4, 10.5), qui présente une face supérieure (36), sachant qu'un chemin d'eau (80) destiné à prélever l'eau fraîche tempérée transperce une paroi du boîtier (10.1, 10.2, 10.3, 10.4, 10.5),
**caractérisé par le fait que** le chemin d'eau (80), dans l'état conforme à la destination, passe au moins à certains endroits au-dessus de la face supérieure (36) et se termine au-dessus de la face supérieure (36),
sachant que le boîtier (10) du dispositif de préparation de boissons a une forme plate et de tablette, et que la face supérieure (36) du dispositif de préparation de boissons est prévue en tant que surface de travail destinée à déposer et à remplir un ou plusieurs récipients (110) avec de l'eau fraîche tempérée provenant du chemin d'eau (80).

2. Dispositif de préparation de boissons selon la revendication 1, **caractérisé par le fait que** le chemin d'eau (80) sort de la face supérieure (36).

3. Dispositif de préparation de boissons selon la revendication 1, **caractérisé par le fait que** le chemin d'eau (80) sort d'une paroi latérale (10.1, 10.2, 10.3, 10.4).

4. Dispositif de préparation de boissons selon une des revendications précédentes, **caractérisé par le fait que**
- l'unité de mise à disposition de l'eau (12) est destinée à tenir de l'eau fraîche à disposition,
- une unité de réception d'eau (14) est comprise, qui est prévue pour la réception d'eaux usées, et
- qu'un dispositif de commutation (22) est prévu pour activer au moins une unité (12, 14, 16, 18, 20), sachant que les unités (12, 14, 16, 18, 20) du dispositif de préparation de boissons sont rassemblées dans le boîtier (10).

5. Dispositif de préparation de boissons selon une des revendications précédentes, **caractérisé par le fait que** sont prévus un dispositif de réglage (26) au moins afin de régler les valeurs des paramètres destinés à préparer les boissons, et/ou un dispositif d'affichage (28) au moins pour afficher les valeurs de paramètres réels et les valeurs de paramètres de consigne.

6. Dispositif de préparation de boissons selon une des revendications précédentes, **caractérisé par le fait qu'**il existe un dispositif de mise en mémoire (30), dans lequel au moins un programme destiné à fabriquer une boisson peut être mémorisé et lu.

7. Dispositif de préparation de boissons selon une des revendications précédentes, **caractérisé par le fait qu'**un dispositif de dosage (32) destiné à fournir de l'eau fraîche dans une quantité définie est prévu.

8. Dispositif de préparation de boissons selon une des revendications précédentes, **caractérisé par le fait que** le dispositif de commutation (22) et/ou un dispositif de pesage (24) destiné à peser une quantité d'ingrédients de boissons et/ou le dispositif de réglage (26) et/ou le dispositif d'affichage (28) et/ou le dispositif de mémorisation (30) et/ou le dispositif de dosage (32) fonctionnent au moins en partie ensemble.

9. Dispositif de préparation de boissons selon une des revendications précédentes, **caractérisé par le fait que** la face supérieure (36) du boîtier (10) comprend au moins deux éléments de surface (38, 40), sachant qu'un premier élément de surface (38) peut être enlevé du boîtier (10) et est perméable à l'eau, et qu'un deuxième élément de surface (40) est lié de façon fixe avec le boîtier (10) et est exécuté perméable à l'eau, sachant que de préférence le premier élément de surface (38) comprend au moins une ouverture, à travers laquelle des déchets peuvent être rincés dans l'unité de réception d'eau (14).

10. Dispositif de préparation de boissons selon une des revendications précédentes, **caractérisé par le fait que** l'unité de mise à disposition de l'eau (12) présente un réservoir d'eau fraîche (46) et que l'unité de réception d'eau (14) présente un réservoir d'eaux usées (48), sachant que les réservoirs d'eau (46, 48) sont placés de façon amovible dans le boîtier (10).

11. Dispositif de préparation de boissons selon une des revendications précédentes, **caractérisé par le fait que** l'unité de mise à disposition de l'eau (12) et/ou l'unité de réception d'eau (14) présente un dispositif de mesure (50) destiné à mesurer le niveau de remplissage dans au moins un réservoir d'eau (46, 48).

12. Dispositif de préparation de boissons selon une des revendications précédentes, **caractérisé par le fait que** l'unité de réception d'eau (14) présente une surface d'écoulement d'eau (52) avec une ouverture d'écoulement (52a), qui aboutit dans le réservoir d'eaux usées (48), sachant que de préférence la surface d'écoulement d'eau (52) est disposée sous le premier élément de surface (38).

13. Dispositif de préparation de boissons selon une des revendications précédentes, **caractérisé par le fait que** l'unité de tempérage (16) est connectée avec le réservoir d'eaux usées (48) via une soupape de trop-plein (56).

14. Dispositif de préparation de boissons selon une des revendications précédentes, **caractérisé par le fait que** l'unité de transport (20) présente un dispositif de capteur (66) destiné à reconnaître un débit de l'eau fraîche.

15. Dispositif de préparation de boissons selon une des revendications précédentes, **caractérisé par le fait que** l'unité de prélèvement d'eau (18) comprends un robinet d'eau (76) qui est disposé de façon fixe ou amovible ou rabattable sur le boîtier (10).
